# EUROPÄISCHE PATENTSCHRIFT

(11) **EP 3 413 148 B1**
(45) Veröffentlichungstag und Bekanntmachung des Hinweises auf die Patenterteilung: **27.07.2022**
(21) Anmeldenummer: 18160927.2
(22) Anmeldetag: 09.03.2018
(51) Int. Cl.: G06F 21/45

(54) **NUMERISCHE STEUERUNG MIT INTEGRIERTER NUTZERVERWALTUNG**
NUMERICAL CONTROL WITH INTEGRATED USER ADMINISTRATION
COMMANDE NUMÉRIQUE COMPRENANT LA GESTION INTÉGRÉE D'UTILISATEURS

(30) Priorität: 07.06.2017 DE 102017209565
(43) Veröffentlichungstag der Anmeldung: 12.12.2018
(73) Patentinhaber: Dr. Johannes Heidenhain GmbH, 83301 Traunreut (DE)
(72) Erfinder: LAMPERSPERGER, Andreas, 83379 Wonneberg (DE)

(56) Entgegenhaltungen:
- US-A1- 2008 059 793
- US-A1- 2009 079 537
- N N: "Db2 11.1 for Linux, UNIX, and Windows Commands (part)", , 1 January 2017 (2017-01-01), pages i-viii,683-686, XP055756740, Retrieved from the Internet: URL:http://ftpmirror.your.org/pub/misc/ftp .software.ibm.com/ps/products/db2/info/vr1 11/pdf/en_US/commandbook.pdf [retrieved on 2020-12-04]

## Beschreibung

### GEBIET DER TECHNIK

Die vorliegende Erfindung betrifft eine Numerische Steuerung mit einer integrierten Nutzerverwaltung. Die Nutzerverwaltung ist ein auf der Numerischen Steuerung installiertes Werkzeug zur Verwaltung der Benutzer von mehreren Numerischen Steuerungen, die über ein Netzwerk miteinander verbunden sind.

### STAND DER TECHNIK

Numerische Steuerungen für Werkzeugmaschinen sind heutzutage auf robusten Industrie-PCs laufende Anwendungen, die zur Steuerung der Antriebe einer Werkzeugmaschine dienen. Auf den Steuerungen läuft inzwischen oft ein herkömmliches Betriebssystem wie Windows oder Linux. Für die Administration der Steuerungen und vor allem auch für die Einrichtung und den Betrieb der Werkzeugmaschinen wird eine Verwaltung von Rechten der verschiedenen Benutzer benötigt. Bei der Inbetriebnahme oder Wartung einer Werkzeugmaschine und ähnlichen Tätigkeiten sind erheblich weitergehende Rechte nötig als beim einfachen Abarbeiten bereits existierender Bearbeitungsprogramme. Auch das Ändern der Bearbeitungsprogramme kann einem erfahrenen Bediener durchaus zugetraut werden, während unerfahrene Bediener keine Änderungen an Bearbeitungsprogrammen oder Einstellungen vornehmen sollen.

In großen PC-Netzwerken sind ähnliche Nutzerverwaltungen bekannt, hier ist ein dedizierter Server mit einem Verzeichnis aller Nutzer und deren Rechten üblich. Dabei kommt z.B. ein LDAP-Verzeichnis (Lightweight Directory Access Protocol) zum Einsatz, das von allen Teilnehmern im Netzwerk erreichbar ist. So eine Struktur muss jedoch von einem erfahrenen Netzwerktechniker eingerichtet und gewartet werden.

Die typische Umgebung, in der numerisch gesteuerte Werkzeugmaschinen zu finden sind, ist eher eine Werkstatt mit einer kleinen Anzahl von Numerischen Steuerungen und Werkzeugmaschinen, die über ein Netzwerk miteinander verbunden sind. Zentrale Server für eine Nutzerverwaltung sind dort ebenso wenig vorhanden wie das Know-how zur Einrichtung und Pflege solcher Strukturen.

Aus der EP 1282846 B2 ist es bekannt, zur Authentifizierungsprüfung und Verwaltung von Benutzerrechten sogenannte Smartcards einzusetzen. In einer zentralen Steuerung oder einem externen PC sind die jeweiligen Rechte und Nutzerdaten hinterlegt. Dezentrale Steuerungen sind mit der zentralen Steuerung über ein Netzwerk verbunden. Ein Nutzer kann sich über einen Kartenleser an einer dezentralen Steuerung anmelden und erhält dann die auf der zentralen Steuerung hinterlegten Rechte. Die Einrichtung einer solchen Nutzerverwaltung erfordert jedoch spezielle Kenntnisse im Bereich der Netzwerkadministration, die in kleineren Betrieben häufig nicht vorhanden ist. Auch die US 20090079537 A1 offenbart eine Werkzeugmaschine, an der sich ein Nutzer mittels eines mobilen Datenträgers anmelden kann, so dass der Nutzer die ihm zugestandenen Rechte zur Bedienung der Werkzeugmaschine erhält. Hierzu wird eine Datenbank im lokalen Netzwerk abgefragt.

Die US 20080059793 A1 beschäftigt sich mit der Absicherung von Smartcards, wie sie beispielsweise in den beiden zuvor genannten Schriften zur Authentifizierung von Nutzern verwendet werden.

Das Befehlshandbuch der Firma IBM "Db2 11.1 for Linux, UNIX, and Windows Commands (part)", 1. Januar 2017 (2017-01-01), Seiten i-viii,683-686, XP055756740, offenbart Computerbefehle, mit denen Einrichtungs- und Konfigurationsdaten im Umfeld von Datenbank - Clients kopiert werden können, um die Einrichtung der Clients zu erleichtern.

### ZUSAMMENFASSUNG DER ERFINDUNG

Es ist daher Aufgabe der Erfindung, eine Numerische Steuerung mit einer integrierten Nutzerverwaltung anzugeben, die besonders einfach und auch von in der Netzwerkadministration unerfahrenen Anwendern von Numerischen Steuerungen eingerichtet werden kann.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird eine Numerische Steuerung mit integrierter Nutzerverwaltung offenbart. Diese Nutzerverwaltung ermöglicht eine steuerungsübergreifende Verwaltung von Nutzerrechten auf mindestens zwei über ein Netzwerk verbundenen Steuerungen, wobei die Steuerung als Server und/oder als Client eigerichtet ist. Auf dem Server sind die Rechte aller Nutzer hinterlegt und von den Clients über das Netzwerk abfragbar.

Auf der Steuerung ist eine erste Softwarekomponente installiert, die das Aufsetzen einer Datenbank mit Nutzerrechten ermöglicht, sowie das Erstellen einer Konfigurationsdatei, die alle für einen sicheren Zugriff auf die Datenbank über das Netzwerk notwendigen Informationen enthält, wobei die erste Softwarekomponente außerdem eingerichtet ist, diese Konfigurationsdatei auf ein Transportmittel zu kopieren.

Auf der Steuerung ist außerdem eine zweite Softwarekomponente installiert, die zum Einlesen der Konfigurationsdatei vom Transportmittel und zur Verarbeitung der Konfigurationsdatei eingerichtet ist, um einen Zugriff auf die Datenbank über das Netzwerk zu ermöglichen.

Möchte man also eine Nutzerverwaltung für mehrere solcher Numerischer Steuerungen aufsetzen, so aktiviert man an einer der Steuerungen die erste Softwarekomponente und beantwortet zunächst einfache Fragen wie die nach einem Passwort, und erhält von der ersten Softwarekomponente eine Konfigurationsdatei, die beispielsweise mittels eines USB-Sticks als Transportmittel zu den anderen Steuerungen im Netzwerk transportiert wird. Die Steuerung mit aktivierter erster Softwarekomponente wird damit zum Server. Auf dieser Steuerung wird eine Datenbank mit den verschiedenen Nutzern und ihren Rechten geführt.

Aktiviert man an den übrigen (oder an allen) Steuerungen die zweite Softwarekomponente, wird die Konfigurationsdatei vom Transportmittel eingelesen und der Zugriff auf die Datenbank der als Server fungierenden Steuerung ermöglicht. Die Steuerungen mit aktivierter zweiter Softwarekomponente werden somit zum Client.

Dank der Ausstattung der Numerischen Steuerungen mit der ersten und zweiten Softwarekomponente ist es also auch einem in der Netzwerkbetreuung unerfahrenen Bediener von Numerischen Steuerungen möglich, auf einfachste Weise eine zentrale Nutzerverwaltung einzurichten. Weder sind Kenntnisse der Netzwerkadministration noch zusätzliche Hardware für einen LDAP-Server notwendig. Bereits in einer Werkstatt mit nur zwei solcher Numerischen Steuerungen lässt sich eine zentrale Nutzerverwaltung einrichten.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

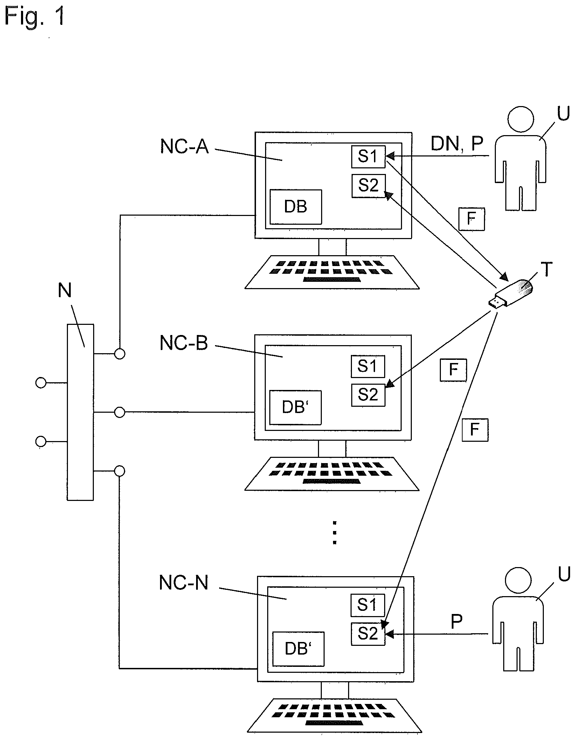

Dabei zeigt
- Figur 1: mehrere Numerische Steuerungen und die Einrichtung einer Nutzerverwaltung.

### BESCHREIBUNG DER AUSFÜHRUNGSFORMEN

In der Figur 1 sind mehrere Numerische Steuerungen NC-A, NC-B, NC-N dargestellt, die über ein herkömmliches, IP-basiertes Netzwerk N miteinander verbunden sind und die über das Netzwerk N miteinander kommunizieren können. Um auf diesen Steuerungen NC-A, NC-B, NC-N auf möglichst einfache Weise eine Nutzerverwaltung einrichten zu können, sind auf jeder Steuerung NC-A, NC-B, NC-N zwei Softwarekomponenten S1, S2 installiert.

Die erste Softwarekomponente S1 wird von einem Benutzer U aktiviert, wenn er eine der Steuerungen NC-A bezüglich der Nutzerverwaltung als Server konfigurieren möchte. Der Server verfügt über die Datenbank DB, in der alle Nutzer zusammen mit ihren jeweiligen Rechten abgespeichert sind. Nach dem Start der ersten Softwarekomponente S1 fragt diese vom Benutzer U lediglich einfache Informationen ab, darunter ein Passwort P, mit dem die Datenbank DB gesichert wird, und das für Änderungen an der Datenbank DB einzugeben ist. Außerdem wird vom Benutzer U ein Domänen-Name abgefragt. Dies ermöglicht es, bei Bedarf mehrere Benutzerverzeichnisse für verschiedene Domänen anzulegen, so dass ein Benutzer in mehr als einer Domäne angelegt werden kann, und dabei auch unterschiedliche Benutzerrechte haben kann.

Die erste Softwarekomponente S1 ist so ausgelegt, dass sie den Server einrichtet, und alle für eine kryptographisch abgesicherte Kommunikation mit dem Server notwendigen Informationen in eine Konfigurationsdatei F schreibt. Zu diesen Informationen zählen Dinge wie die URL (Uniform Resource Locator) eines LDAP-Servers, der konfigurierte Domänen-Name, kryptografische Schlüssel, Hash-Werte, Zertifikate, Diffie-Hellman Parameter und andere, im Prinzip aus der Informationstechnologie bekannte Dinge, die letztlich für eine sichere, mittels TLS (Transport Layer Security) verschlüsselte Kommunikation mit der Datenbank DB notwendig sind. Diese Konfigurationsdatei F wird durch die erste Softwarekomponente S1 auf ein Transportmittel T wie beispielsweise einen USB-Stick kopiert. Als Transportmittel T kann aber auch ein von allen Steuerungen NC-A, NC-B, NC-N aus erreichbarer Speicherort im Netzwerk N dienen.

Der Benutzer U kann nun an allen Steuerungen NC-A, NC-B, NC-N im Netzwerk N die zweite Softwarekomponente S2 aktivieren, um diese Steuerungen jeweils als Client einzurichten. Hierzu liest die zweite Softwarekomponente S2 die Konfigurationsdatei F vom Transportmittel T ein und verarbeitet diese. Anschließend kann ein LDAP-Client gestartet werden, der unter TLS-Verschlüsselung mit dem LDAP-Server in der Steuerung NC-A kommuniziert. Auch auf der als Server konfigurierten Steuerung NC-A wird ein Client eingerichtet, um den Server abfragen und administrieren zu können.

Die ausschließlich als Client konfigurierten Steuerungen NC-B, NC-N können eine Kopie DB' der Datenbank DB aus der als Server konfigurierten Steuerung NC-A enthalten, in der zumindest die letzten Abfragen von Nutzern und deren Rechten für einige Tage gespeichert werden, so dass ein einmal an einer bestimmten Steuerung angemeldeter Nutzer auch in den Tagen danach an dieser Steuerung angemeldet werden kann, auch wenn die Steuerung NC-A mit der Datenbank DB gerade abgeschaltet oder aus anderen Gründen nicht im Netzwerk N erreichbar ist. Die Kopie DB' hat eine zeitlich begrenzte Gültigkeit, um spätestens nach einigen Tagen eine Synchronisation mit dem Server zu erzwingen.

Häufig werden Numerische Steuerungen auch zu Trainingszwecken oder als Programmierstation betrieben, ohne tatsächlich eine Werkzeugmaschine zu steuern. Auch eine solche Steuerung kann, sofern sie erfindungsgemäß eingerichtet ist, als Server oder Client im Netzwerk N arbeiten.

Die Softwarekomponenten S1, S2 sind bevorzugt mit einer graphischen Benutzeroberfläche ausgestattet, die den Benutzer U über die notwendigen Eingaben und Schritte unterrichtet, und ihn bei der Einrichtung der Nutzerverwaltung bestmöglich unterstützt. Auf diese Weise können auch in der Netzwerktechnik unerfahrene Benutzer U eine zentrale, netzwerkbasierte Nutzerverwaltung einrichten und sicher betreiben.

Ein Benutzer U kann sich nun an jeder Steuerung NC-A, NC-B, NC-N im Netzwerk N anmelden. Hierzu kann ein Nutzername und ein Passwort dienen, oder auch andere Identifikationsmittel wie die eingangs erwähnte Smartcard. Ist der Benutzer U in der Datenbank DB angelegt, bekommt er den seinen in der Datenbank DB hinterlegten Rechten entsprechenden Zugriff auf die Steuerung.

Auch das Anlegen neuer Nutzer oder das Ändern der Datenbank DB ist von jeder Steuerung NC-A, NC-B, NC-N aus möglich, wenn das Passwort P bekannt ist.

## Patentansprüche

1. Numerische Steuerung mit integrierter Nutzerverwaltung, die eingerichtet ist zur steuerungsübergreifenden Verwaltung von Nutzerrechten auf mindestens zwei über ein Netzwerk (N) verbundenen Steuerungen (NC-A, NC-B, NC-N), wobei die Steuerung als Server (NC-A) und/oder als Client (NC-A, NC-B, NC-N) eingerichtet ist, wobei auf dem Server (NC-A) die Rechte aller Nutzer hinterlegt und von den Clients (NC-A, NC-B, NC-N) abfragbar sind, **dadurch gekennzeichnet,**
• **dass** auf der Steuerung (NC-A, NC-B, NC-N) eine erste Softwarekomponente (S1) installiert ist, die das Aufsetzen einer Datenbank (DB) mit Nutzerrechten ermöglicht, sowie das Erstellen einer Konfigurationsdatei (F), die alle für einen Zugriff auf die Datenbank (DB) über das Netzwerk (N) notwendigen Informationen enthält, und dass die erste Softwarekomponente (S1) außerdem eingerichtet ist, diese Konfigurationsdatei (F) auf ein Transportmittel (T) zu kopieren,
• und **dass** auf der Steuerung (NC-A, NC-B, NC-N) außerdem eine zweite Softwarekomponente (S2) installiert ist, die zum Einlesen der Konfigurationsdatei (F) vom Transportmittel (T) und zur Verarbeitung der Konfigurationsdatei (F) eingerichtet ist, um einen Zugriff auf die Datenbank (DB) über das Netzwerk (N) zu ermöglichen,
• und **dass** die ausschließlich als Client (NC-B, NC-N) konfigurierten Steuerungen eine Kopie (DB') der Datenbank (DB) aus der als Server (NC-A) konfigurierten Steuerung enthalten, wobei in der Kopie (DB') zumindest die letzten Abfragen von Nutzern (U) und deren Rechte gespeichert sind, so dass auch bei einer temporären Nichterreichbarkeit der Datenbank (DB) im Netzwerk (N) dennoch Abfragen von Nutzerrechten eines Nutzers (U) an der ausschließlich als Client (NC-B, NC-N) konfigurierten Steuerung ermöglicht sind, wobei die Gültigkeit der Kopie (DB') zeitlich begrenzt ist.

2. Numerische Steuerung nach Anspruch 1, **dadurch gekennzeichnet, dass** die Numerische Steuerung (NC-A, NC-B, NC-N) bezüglich der Nutzerverwaltung Server und/oder Client sein kann.

3. Numerische Steuerung nach Anspruch 2, **dadurch gekennzeichnet, dass** die Numerische Steuerung ein Server (NC-A) ist, wenn die erste Softwarekomponente (S1) aktiviert wurde, und dass die Numerische Steuerung ein Client (NC-A, NC-B, NC-N) ist, wenn die zweite Softwarekomponente (S2) aktiviert wurde.

4. Numerische Steuerung nach einem der vorhergehenden Ansprüche, **dadurch gekennzeichnet, dass** die erste Softwarekomponente (S1) eingerichtet ist, ein Passwort (P) von einem Nutzer (U) entgegen zu nehmen.

5. Numerische Steuerung nach Anspruch 4, **dadurch gekennzeichnet, dass** die zweite Softwarekomponente (S2) eingerichtet ist, nach der Eingabe des Passworts (P) Änderungen an der Datenbank (DB) zu bewirken.

6. Numerische Steuerung nach einem der vorhergehenden Ansprüche, **dadurch gekennzeichnet, dass** das Transportmittel ein USB-Stick ist.

## Claims

1. Numerical controller with integrated user administration that is configured for cross-controller administration of user rights on at least two controllers (NC-A, NC-B, NC-N) connected via a network (N), wherein the controller is configured as a server (NC-A) and/or as a client (NC-A, NC-B, NC-N), the rights of all users being stored on the server (NC-A) and able to be requested by the clients (NC-A, NC-B, NC-N), **characterized**
• **in that** the controller (NC-A, NC-B, NC-N) has a first software component (S1) installed on it that allows the setup of a database (DB) containing user rights, and the creation of a configuration file (F) that includes all the information required for accessing the database (DB) via the network (N), and in that the first software component (S1) is additionally configured to copy this configuration file (F) to a means of transport (T),
• and **in that** the controller (NC-A, NC-B, NC-N) additionally has a second software component (S2) installed on it that is configured to read in the configuration file (F) from the means of transport (T) and to process the configuration file (F) in order to allow access to the database (DB) via the network (N),
• and **in that** the controllers that are configured exclusively as a client (NC-B, NC-N) include a copy (DB') of the database (DB) from the controller configured as a server (NC-A), wherein the copy (DB') stores at least the last requests from users (U) and the rights thereof, so that even if the database (DB) is temporarily unavailable in the network (N) there is still the possibility of requests for user rights of a user (U) on the controller configured exclusively as a client (NC-B, NC-N), the validity of the copy (DB') having a time limit.

2. Numerical controller according to Claim 1, **characterized in that** the numerical controller (NC-A, NC-B, NC-N) may be a server and/or a client for the user administration.

3. Numerical controller according to Claim 2, **characterized in that** the numerical controller is a server (NC-A) if the first software component (S1) has been activated, and **in that** the numerical controller is a client (NC-A, NC-B, NC-N) if the second software component (S2) has been activated.

4. Numerical controller according to one of the preceding claims, **characterized in that** the first software component (S1) is configured to accept a password (P) from a user (U).

5. Numerical controller according to Claim 4, **characterized in that** the second software component (S2) is configured to bring about changes to the database (DB) after input of the password (P).

6. Numerical controller according to one of the preceding claims, **characterized in that** the means of transport is a USB stick.

## Revendications

1. Commande numérique avec gestion intégrée des utilisateurs, laquelle est conçue pour une gestion intercommandes des droits d'utilisateur sur au moins deux commandes (NC-A, NC-B, NC-N) reliées par le biais d'un réseau (N), la commande étant conçue en tant que serveur (NC-A) et/ou en tant que client (NC-A, NC-B, NC-N), les droits de tous les utilisateurs étant stockés sur le serveur (NC-A) et pouvant être interrogés par les clients (NC-A, NC-B, NC-N), caractérisée en ce
* qu'un premier composant logiciel (S1) est installé sur la commande (NC-A, NC-B, NC-N), lequel rend possible la dépose des droits d'utilisateurs dans une base de données (DB), ainsi que la création d'un fichier de configuration (F) qui contient toutes les informations nécessaires pour un accès à la base de données (DB) par le biais du réseau (N), et en ce que le premier composant logiciel (S1) est en outre conçu pour copier ce fichier de configuration (F) sur un moyen de transport (T),
* et qu'un deuxième composant logiciel (S2) est en outre installé sur la commande (NC-A, NC-B, NC-N), lequel est conçu pour charger le fichier de configuration (F) depuis le moyen de transport (T) et pour traiter le fichier de configuration (F) afin de rendre possible un accès à la base de données (DB) par le biais du réseau (N),
* et que les commandes configurées exclusivement en tant que clients (NC-B, NC-N) contiennent une copie (DB') de la base de données (DB) issue de la commande configurée en tant que serveur (NC-A), au moins les dernières interrogations d'utilisateurs (U) et de leurs droits étant enregistrées dans la copie (DB'), de sorte que les interrogations des droits d'utilisateur d'un utilisateur (U) auprès de la commande configurée exclusivement en tant que client (NC-B, NC-N) soient tout de même possibles même dans le cas d'une inaccessibilité temporaire de la base de données (DB) dans le réseau (N), la validité de la copie (DB') étant limitée dans le temps.

2. Commande numérique selon la revendication 1, **caractérisée en ce que** la commande numérique (NC-A, NC-B, NC-N) peut être serveur et/ou client pour ce qui concerne la gestion des utilisateurs.

3. Commande numérique selon la revendication 2, **caractérisée en ce que** la commande numérique est un serveur (NC-A) lorsque le premier composant logiciel (S1) a été activé, et **en ce que** la commande numérique est un client (NC-A, NC-B, NC-N) lorsque le deuxième composant logiciel (S2) a été activé.

4. Commande numérique selon l'une des revendications précédentes, **caractérisée en ce que** le premier composant logiciel (S1) est conçu pour accepter un mot de passe (P) de la part d'un utilisateur (U).

5. Commande numérique selon la revendication 4, **caractérisée en ce que** le deuxième composant logiciel (S2) et conçu pour, après la saisie du mot de passe (P), provoquer des modifications à la base de données (DB).

6. Commande numérique selon l'une des revendications précédentes, **caractérisée en ce que** le moyen de transport est une clé USB.
